# EUROPEAN PATENT APPLICATION

(11) **EP 4 032 603 A1**
(43) Date of publication of application: **27.07.2022**
(21) Application number: 21153067.0
(22) Date of filing: 22.01.2021
(51) Int. Cl.: B01D 61/14, B01D 61/18, B01D 63/16, B01L 3/00

(54) **FILTER**

(71) Applicant: Reardon, Paul Charles, High Wycombe, Buckinghamshire HP12 3PY (GB)
(72) Inventor: Reardon, Paul Charles, High Wycombe, Buckinghamshire HP12 3PY (GB)
(74) Representative: Eyre, David Edward

(57) **Abstract**

A device for insertion in a receptacle for acceleration by centrifugation comprising: a vessel with side walls and a base; wherein the side walls of the vessel comprise at least one portal; wherein the portal is partially or wholly covered by a semipermeable membrane; wherein the semipermeable membrane is located vertically with respect to the receptacle for centrifugation; and wherein the filtering surface of the semipermeable membrane faces externally with respect to the interior of the vessel. Also provided are methods for processing liquids or suspensions utilising such devices and methods for manufacturing such devices.

## Description

### Field of the Invention

The present invention relates to devices for filtration of liquids with molecules and/or macromolecules contained therein, wherein the devices comprise a reservoir for the liquid to be filtered and a semipermeable membrane through which the filtrate passes and the retentate does not. Accordingly, the invention also relates to methods of filtering liquids comprising molecules and/or macromolecules. In particular the invention relates to devices where filtration is augmented or enabled by filtering the liquid while under acceleration (e.g. where the acceleration is generated by centrifugation). Further, the invention relates to methods and tools for manufacturing devices of the invention.

### Background of the Invention

Purifying, concentrating and/or isolating molecules and/or macromolecules from solutions has long been a central concern in the fields of chemistry, biochemistry, molecular biology, biology and physiology.

In particular, has long been a need in the fields of biology, biochemistry, molecular biology and genetics for the simple and effective processing of solutions comprising molecules and/or macromolecules by way of purifying, concentrating and/or isolating such molecules from the liquid in which they are comprised. Passing such solutions through semipermeable ultrafiltration membranes using centrifugal force as a driver has been utilised since the 1970s for these purposes, i.e. purification, concentration, and isolation of macromolecules from solutions.

Particular applications of this technology exist such as isolation of proteins from liquid biological media or samples of body fluid, concentration of protein samples or to produce a protein-free filtrate.

Such methods are reviewed in U.S. Pat. No. 3,488,768 (Rigopulos, 1970). Whilst these methods are useful they have consistently been found to be deficient owing to producing low yields, absorption of the molecules and/or macromolecules onto the membrane due to the force "caking" sample on to the membrane (i.e. the tendency of the concentrated molecules and/or macromolecules to form lumps or masses on the membrane and thus wholly or partially blocking or otherwise occluding the semipermeable membrane) and the technical difficulties associated with removing the filtered or retained products from the vessels of devices having one or more of these disadvantages.

Further examples of similar devices, techniques and technologies utilising selective centrifugation of liquid comprising molecules or macromolecules wherein the liquid is driven through a semipermeable membrane by the action of an applied centrifugal force are found in: US3488768 (Rigopulos); US3832141 (Haldopoulos); US4035150 (Jaffe); US4159251 (Wrasidlo); US4483825 (Fatches); US4522713 (Nussbaumer); US4632761 (Bowers); US4702834 (Relyea); US4231865 (Spiegler); US5552325 (Nochumson); US6375855 (Vassarotti); and US6837995 (Vassarotti).

Typically devices in this field have semipermeable membranes that are horizontally positioned. Vertically positioned membranes are significantly rarer and in these cases the membrane active layer faces towards the interior of the device (see US6375855 (Vassarotti); and US6837995 (Vassarotti)).

Bowers (US4632761) considers the use of a reverse membrane located in reverse position to that which is standard. However, notably the utility of Bowers is limited due to the large hold up volume and the need to decant filtrate from the filtrate reception vessel several times during the filtration process to obtain a desired final concentration factor.

In this context, the hold-up volume of a filtration device is the volume of liquid that has been processed but is retained in the filtration device following the recovery step, e.g. because of the configuration design of the device. Accordingly, the hold-up volume of liquid is the portion of the processed fluid which cannot usefully be obtained by the user of the device.

### Object of the Invention

An object of the present invention is to provide improved devices for chemistry, biochemistry, molecular biology, biology, genetics at and/or physiology for selectively filtering molecules and macromolecules from liquid solutions. In particular an object of the present invention is to provide devices of this type and function that operate by the filtrate being moved through a semipermeable membrane, such as an ultrafiltration membrane, by accelerative forces such as those provided by centrifuge.

### Summary of the Invention

Accordingly, the invention provides a device for insertion in a receptacle for acceleration by centrifugation comprising:
a vessel with side walls and a base;
wherein the side walls of the vessel comprise at least one portal;
wherein the portal is partially or wholly covered by a semipermeable membrane;
wherein the semipermeable membrane is located vertically with respect to the receptacle for centrifugation; and
wherein the filtering surface of the semipermeable membrane faces externally with respect to the interior of the vessel.

The invention also provides a method for processing liquids or suspensions comprising the steps of:
inserting a device of the invention in a receptacle for centrifugation;
adding the liquid or suspension for processing to the receptacle for centrifugation or the vessel of the device of the invention;
subjecting the resulting assembly of parts to centrifugation or increased g forces.

Thus the invention specifically relates to a device and method for use thereof in the filtration of a fluid by facilitating the flow of filtrate from a reservoir outside the device (typically in the receptacle for centrifugation) to the inside portion ("vessel") of the device. That is, the composition to be filtered may be placed in an outer container and the filter device for receiving filtrate immersed in said liquid. When coupled with centrifugal force this immersion allows filtrate to migrate from the outer reservoir into the interior volume of the immersed filter device. Accordingly this allows the advantage of a reservoir of filtrate that is at least at the same level of the liquid being filtered and so is accessible directly following the filtering process, preferably from the top of the tube and most preferably via a tube or other portal to the filtrate reservoir of the vessel.

Even more preferably this reservoir is accessible by pipette and the filtrate can be removed in this way.

Accordingly, the base of the device may be sealed. This has the advantage of forcing the flow of filtrate to move laterally from the reservoir of liquid to be processed into the filtration vessel through the semipermeable membrane. This lateral movement within the tube yields the advantage of the area of the semipermeable membrane being limited by the length and circumference of the device of the invention and the receptacle for centrifugation that it is intended to be inserted into rather than by the smaller area of the diameter/transverse cross section of the receptacle for centrifugation (typically a centrifuge tube with a circular cross section). Hence a greater area of semipermeable membrane can be made available for filtration. This has the advantages of greater filtration rate (flux) and lower chances of blocking, fouling or saturating the semipermeable filter compared with filters having smaller areas.

An advantage of increased semipermeable membrane area is optimised membrane contact time. Higher membrane contact time results in greater non-specific absorption onto the membrane. Furthermore, a higher contact time causes a greater degree of degradation of proteins comprised in fluids processed via the semipermeable membrane. A further advantage of increased semipermeable membrane area is a lower rate of fouling of the membrane due to, e.g. caking of material on the membrane.

A still further advantage is that the device allows minimal loss of sample by reverse filtration.

Accordingly, a particular advantage is that heavily particle-laden solutions are filtered very effectively by devices and methods of the invention because such solutions do not block, foul and/or saturate, or otherwise occlude, the semipermeable membrane. This is a particular advantage in the field of protein crystallisation wherein micelles are formed in protein-containing solutions due to the detergents used. These micelles and then not removable through the use of conventional ultrafiltration concentrator devices. Thus the present devices and methods are advantageous in allowing filtration of both dilute solutions and particle-laden samples.

The semipermeable membrane may be an ultrafiltration membrane with or without a support structure.

Typically, ultrafiltration (UF) membranes are comprised of a semi-permeable, polymeric membrane layer cast onto a uniform substrate, or backing material. Ultrafiltration membranes can be made from materials including, but not limited to, the following: regenerated cellulose, Teflon^{™} (polytetrafluoroethylene; PTFE), polysulphone , polyethersulphone.

The semipermeable or ultrafiltration membrane may have a molecular-weight cut-off (MWCO) of 1000, 3000, 5000, 10,000, 20,000, 30,000, 50,000, 100,000, 200,000, 250,000, 300,000, 400,000, 500,000, or 800,000 Daltons. Preferably the semipermeable or ultrafiltration membrane has a MWCO of 3,000, 10,000, 30,000 or 100,000 Daltons. Accordingly, the devices and methods of the invention are suitable for filtration and/or concentration of a wide variety of dissolved or suspended materials, particularly proteins.

Thus devices of the invention may be for installation in a centrifuge. Accordingly, it is preferred that the devices are installed in receptacle that is also for centrifugation. The receptacle for centrifugation may be sealed or unsealed. A receptacle for centrifugation is preferably a vessel with a sealed base. The base of the receptacle may be flat or may be extended further in the form of a cone or hemisphere providing a volume of similar volume within the receptacle. Preferably the receptacle is sealed with a cap, most preferably a screw-top cap. This has the advantage that filtration can be carried out in a controlled environment.

Suitable receptacles that are in common use include, but are not limited to, laboratory tubes such as those made by Falcon^{™}, Greiner^{™} and Corning^{™}, and bespoke tubes may be employed. Typically Falcon^{™} (50 mL and 15 mL laboratory tubes), Sterilin^{™} (30 ml "Universal" tubes), and microfuge tubes (such as those manufactured by Eppendorf^{™} to contain 1.2, 1.5, or 2.0 mL volumes) may be used. Each of these standard tube types is typically available in a variant that has a substantially or completely conical base. Bases of this form have the advantage of providing a stable foundation for a component inserted into a tube which has a similarly shaped base. Conical bases also have the advantage of more efficiently gathering concentrate or retentate during a centrifugal recovery step for these materials.

The acceleration exerted on the device may be provided by centrifugation. Centrifugation is a mechanical process which involves the use of centrifugal force (e.g. provided by centripetal acceleration) to separate particles from a solution according to their size, shape, density, medium viscosity and strength of the acceleration. In the case of centripetal acceleration this is defined by the speed of rotation of the centrifuge rotor and the objects borne thereby.) Components of such a mixed solution migrate away from the axis of the centrifuge at a rate determined by their density and/or relative buoyancy in the solution.

Acceleration forces are typically provided by way of centrifugation but other means of providing acceleration forces also fall within the scope of this disclosure.

The force of acceleration may be measured in terms of "g", i.e. the acceleration due to gravity at the surface of the Earth (which is approximately 9.8 ms⁻²).

The device may be formed such that the semipermeable membrane may be located in spaced separation from the inner surface of the receptacle for centrifugation. Preferably the semipermeable membrane is substantially parallel to the inner surface of the receptacle for centrifugation. That is, preferably, the semipermeable membrane of the device follows the curvature or shape of the inner surface of the receptacle for centrifugation in which it is installed. This feature yields the benefit of low hold up volume.

The inner wall of the receptacle for centrifugation and the outer wall of the vessel may have matching forms such that the inner wall of the receptacle for centrifugation and the outer wall of the vessel lie in spaced separation. Preferably this clearance or separation distance is constant around the perimeter of the vessel.

Preferably the perimeter is a circular circumference. Accordingly, preferably the receptacle has a substantially hollow cylindrical interior. Accordingly, preferably the vessel has a substantially cylindrical exterior surface. Preferably air can flow between the outer wall of the device and the inner wall of the receptacle. This has the advantage of allowing convenient insertion of the device in the receptacle for centrifugation.

The device may be formed such that separation distance between the inner surface of the receptacle for centrifugation and the semipermeable membrane may be 0.1mm, 0.2mm, 0.3mm, 0.4mm, 0.5mm, 0.75mm, 1mm, but is not limited to these precise dimensions. Preferably the separation distance between the inner surface of the receptacle for centrifugation and the semipermeable membrane is 0.1mm.

The semipermeable membrane preferably forms a cylinder encompassing the interior volume of the vessel. This has the advantage of maximising the available area of semipermeable membrane.

A still further advantage is that the device allows minimal loss of sample by reverse filtration.

The advantage of a smaller separation distance is a lower hold-up volume and therefore a better yield of concentrate. Furthermore, a smaller separation distance has the advantage of maximising the volume of the vessel of the device in order to maximise the volume of eluate and reduce the number of filtration procedures required (e.g. the number of centrifugations required).

The elevated g forces may conveniently be provided by means of centrifugation of the assembly of parts.

Centrifugation may be carried out in a centrifuge equipped with a swinging bucket rotor whereby the centrifugal forces are applied effectively vertically (i.e. 90° to the axis or rotation) with respect to the assembly being centrifuged. An advantage of using a swinging bucket rotor is that the pressure of the liquid being filtered/processed is even on the surface of the semipermeable membrane comprised in a device of the invention. This yields the attendant advantage improved or optimised flow characteristics and reduces the changes of blocking, fouling or saturating the semipermeable membrane.

Centrifugation may be carried out in a centrifuge equipped with in a fixed angle rotor whereby the centrifugal forces are applied at a stable angle with respect to the assembly being centrifuged. The angle of centrifugation may be 23°, 24°, 25°, 26°, 27°, 28°, 29°, 30 °, 31°, 32°, 33°, 34°, 35°, 36°, 37°, 38°, 39°, 40°, 41°, 42°, 43°, 44°, 45°, 50°, 55°, 60°, 65°, 70°, 75°, 80° or 85° to the axis of rotation. Preferably the fixed angle of centrifugation is 45°.

Centrifugation may be carried out at 500-3000 g. Centrifugation may be carried out at 500 g, 600 g, 700 g, 800 g, 900 g, 1000 g, 1100 g, 1200 g, 1300 g, 1400 g, 1500 g, 1750 g, 2000 g, 2250 g, 2500 g, 2750 g, or 3000 g.

The portal may be wholly or partially covered by a semipermeable membrane. The portals may be covered by material that comprises a portion of semipermeable membrane. Preferably the portals are wholly covered by the semipermeable membrane.

The device may have 1, 2, 3, 4, 5, 6, 7 or 8 portals. Preferably the device has 1 or 4 portals.

A particular advantage of a planar semipermeable membrane that does not follow the internal form of the receptacle for centrifugation is that the manufacturing process for the device is simplified.

The number of portals and area of semipermeable membrane available for filtration may be varied in order to alter or optimise the flow rate (flux) and/or filtrate volume obtained. In this way the devices and methods of the invention may be adapted to standard protocols and operating procedures where such parameters are required.

The advantage of a greater number of portals is thus that higher flow rates (flux) are yielded by enabling a greater area of semi-permeable membrane to be deployed for filtration.

An advantage of a lesser number of portals is that the strength of the vessel/device may be increased by minimising the number of weakened areas in the walls of the device. Similarly an advantage of a lesser number of portals is that the endurance of the device is optimised.

Accordingly, the portals may be regularly spaced in the walls of the vessel and preferably are each of the same size/dimensions in order to maximise the strength and/or endurance of the device of the invention under increased g forces.

An advantage of the vertically located semipermeable membrane is that methods and devices for concentrating macromolecules from a solution (e.g. by centrifugation) are enabled but without filtering to the point of dryness of the semipermeable membrane. This yields the consequent advantage of recovering the optimum (maximal) amount of concentrated macromolecular retentate.

That is, filtration does not stop until the vessel of the device is full and/or the retentate meniscus in the vessel of the device matches the level of the meniscus of the reservoir of the retentate that is outside the vessel but inside the receptacle for centrifugation due to counter-balancing hydrostatic pressures. Accordingly, given that the volumes of liquids on either side of the membrane can be set to complete the filtration process while maintaining the level of the liquids above the top edge of the semipermeable membrane, it is possible to ensure that there is no duration of filtration that would cause dryness of the semipermeable membrane, even with extended centrifugation needed to allow for variation in individual membrane filtration rates. Accordingly, it is possible to produce devices of the invention and allied protocols whereby filtration can conveniently proceed to equilibration rather than having to monitor the progress of filtration. Devices and/or methods of the invention are conceived of whereby the amount of liquid to be processed and/or filtered, the volume of the filtration vessel and the volume of the receptacle for centrifugation are varied in concert to produce an embodiment of the invention whereby a set volume of liquid for processing can be added to an assembly described herein and centrifuged to the point of equilibration without having to take especial account of the progress of the filtration process.

Thus in methods described herein the parameters for processing the volume of liquid or suspension added to the receptacle for centrifugation installed in the receptacle for centrifugation may be not greater than the volume of the vessel of the device combined with the volume of the receptacle external to the installed device to the height of the upper limit of the portal of the device.

This has the advantage of being able to process liquids with different speeds of filtration in a device of the invention at the same time yet being able to arrange for the same end point of the centrifugation procedure with each of the varying samples at the same stage of filtration. This yields advantages in reliability and convenience of processing batches of samples and simplifying standard operating procedures for analytical or other purposes.

Furthermore control of the volume of material to be filtered and automatic control of the end point of the filtration process through equilibrium allows there to be complete containment of biohazardous samples during centrifugal force-enhanced filtration.

The inner filter device may have projections or other adornments for releasably securing the filter device to the cap. The cap of the centrifuge receptacle may have a central aperture shaped to allow the inner filter device to be suspended therefrom. Preferably the suspension is via wings on the upper portion of an upper tube of the filter device that can pass through the aperture of the cap and rest on the exterior of the replacement cap in order to suspend the filter device. This has the advantage of moving the filter device to be clear of the base of the receptacle and to provide a void into which the concentrate can be recovered conveniently by a further centrifugation step.

The invention also provides a kit comprising a device of invention. The kit may also comprise a receptacle for centrifugation as described herein. Preferably the device for centrifugation is a centrifuge tube as described herein.

The kit may comprise a device of the invention pre-installed in a receptacle for centrifugation, preferably a centrifuge tube as described herein.

Kits of the invention have the advantage of convenience and ensuring compatibility between co-operating components. Pre-installation of devices of the invention in receptacles for centrifugation has the advantage that the assembly may be supplied in a sterile condition. Alternatively, should semipermeable membranes be fragile or degradable with the need to be maintained in an inert atmosphere (e.g. Nitrogen or Argon) then the kits can be constructed with these atmospheres. Similarly, if the semipermeable membranes need to be maintained in a moist or wet condition in an atmosphere saturated with water or other agent then the kits can be constructed with these conditions maintained in the sealed receptacle for centrifugation until the kit needs to be opened and used for filtration. Such kits may also have the advantage of being ready for use immediately without having to process or pre-prepare the semipermeable membranes or other components of the filtering apparatus.

The invention also provides an injection moulding tool for producing devices of the invention or components thereof.

Accordingly, devices of the invention or components thereof may by manufactured by injection moulding methods. Preferably the devices of the invention or components thereof are made from plastics material. More preferably these are plastics materials which are characterised by low absorbance of protein, such as polypropylene and/or polycarbonate.

Injection moulding of devices of the invention is advantageous because it yields products with monolithic, consistent internal structure that minimises the occurrence of flaws or weak spots in the products that might occur in multi-part devices. Such flaws or weak spots might be exposed under centrifugation by resulting in failure of the device.

A semipermeable membrane may be attached to devices of the invention by gluing the membrane into place. UV curable glues or cyanoacrylates may be used for this purpose.

The methods of manufacture of devices of the invention or components thereof may comprise the step of applying semipermeable membrane to pre-determined portions of the injection moulding tool, closing the tool, admitting plastics material to the void formed by closing the tool, allowing the plastics material to solidify, and removing the product from the tool wherein the semipermeable membrane is incorporated and/or secured in the plastics material of the product in a pre-determined position.

This process yields the advantage of injection moulding of forming the device and incorporating the ultrafiltration membrane into the device in one step. This is known as over moulding of the membrane. This may be achieved by applying the ultrafiltration membrane to the portion of the injection moulding tool intended to form the portal in the vessel of the device, then closing the tool and injecting plastics material into the tool such that the device is formed with the ultrafiltration membrane incorporated directly therein by virtue of the plastics material having contacted and set in contact with the ultrafiltration membrane, and removal of the device from the moulding tool. A further advantage flows from the backing material of the semipermeable membrane. Membranes that have a (typical) polypropylene backing naturally seals to the body of the device body during the moulding process.

A further advantage is that a device for filtration is provided which does not require using glue or other adhesive as a method of securing the semipermeable membrane in position.

Accordingly, the injection moulding tool may be marked to show the location that the semipermeable membrane should be applied and/or fixed prior to closing the tool.

The invention also provides a kit comprising an injection moulding tool of the invention and compatible semipermeable membranes. The invention also provides a kit comprising an injection moulding tool of the invention and compatible semipermeable membranes pre-cut to the correct size for inclusion in the finished product.

An advantage of the components described herein being formed by injection moulding of plastics material is that they are of such low cost that they may be disposable after one use.

### Examples and Descriptions of the Drawings

The invention is now illustrated in the following specific embodiments with reference to the accompanying drawings showing:
**FIG. 1** (a) is a side view of a standard laboratory centrifuge tube and (b) such a centrifuge tube containing a solution in readiness for a device of the invention to be inserted into the tube.
**FIG. 2** (a) is a cross sectional view of an assembled filtration device of the invention for insertion into a centrifuge tube along line A-A shown in (b). (b) is a side view of an assembled filtration device of the invention for insertion into a centrifuge tube. (c) is an isometric view of an assembled filtration device of the invention for insertion into a centrifuge tube. (d) is an exploded view of the filtration device showing the position of a cylinder of semi-permeable membrane within the device.
**FIG. 3** is an alternative embodiment of the invention wherein the semi-permeable membranes are mounted within the device to be vertical and flat, planar in form.

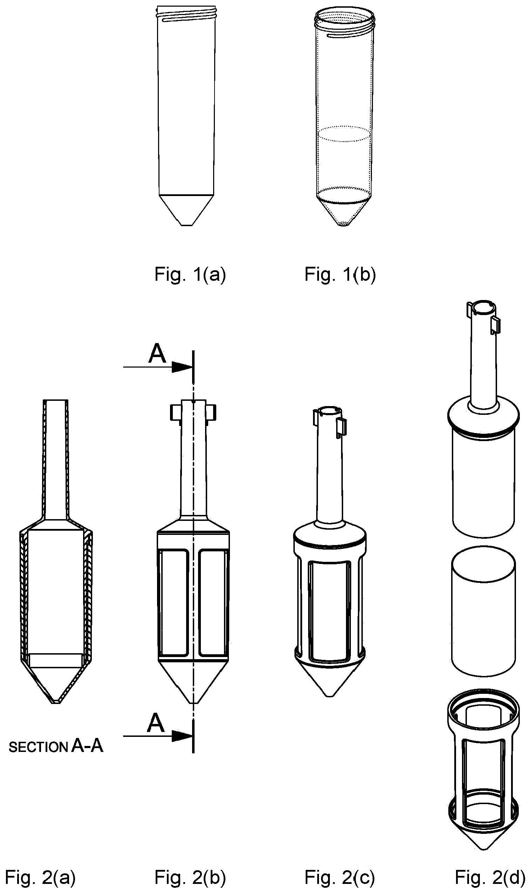

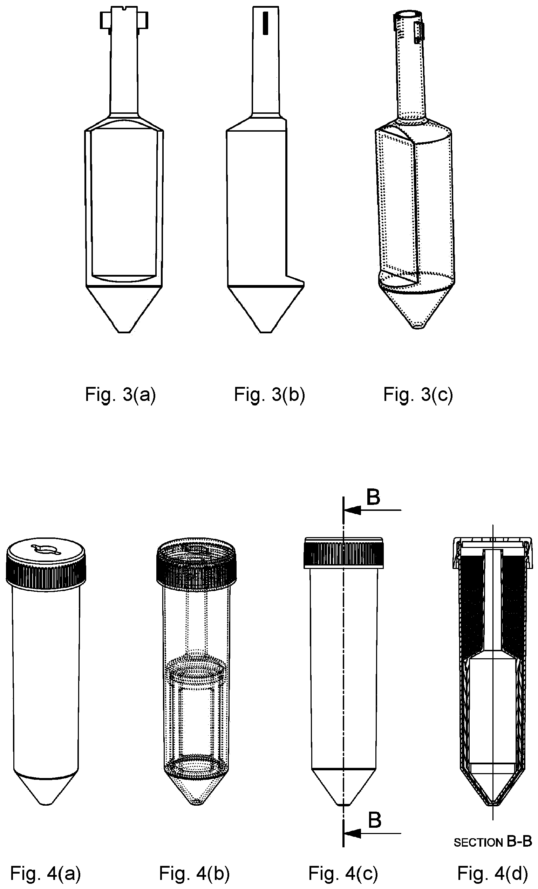

**FIG. 4** is a view of the device of the invention inserted in a centrifuge tube as shown in Fig 1 wherein the device of the invention is also immersed in a liquid contained in the centrifuge tube. Thus Fig. 4(d) shows a cross section of the assembly to be subjected to centrifugation in order to filter the liquid taken along line B-B of Fig. 4(c). Fig. 4(a) shows an external isometric view of the assembled components shown in Fig. 4(d) prior to centrifugation. Fig. 4(b) shows a wire-frame isometric view of the assembled components shown in Fig. 4(d) prior to centrifugation. Fig. 4(c) shows a side view of the assembled components shown in Fig. 4(d) prior to centrifugation.

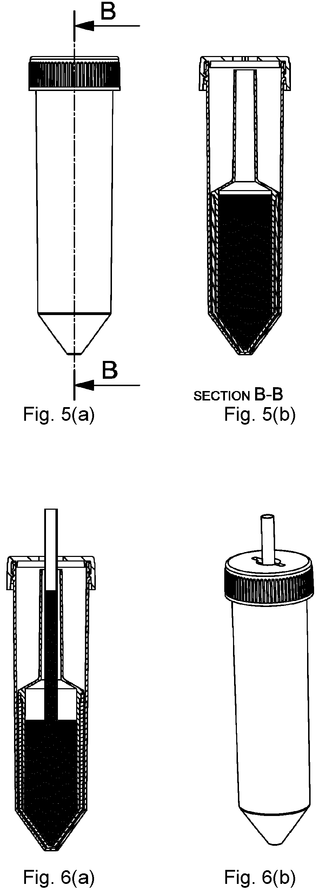

**FIG. 5**(a) shows a side view of the assembled components shown in Fig. 4(d) after centrifugation. Thus Fig. 5(b) shows a cross section of the assembly of Fig. 5(a) taken along line B-B showing the position of the filtrate and retentate liquid following filtration.
**FIG. 6** shows a cross section of the assembly of Fig. 6(b) showing the position of the filtrate and retentate as the filtrate is removed from the filter vessel through a pipette inserted into the filtrate retaining vessel via an aperture in the cap of the centrifuge tube.

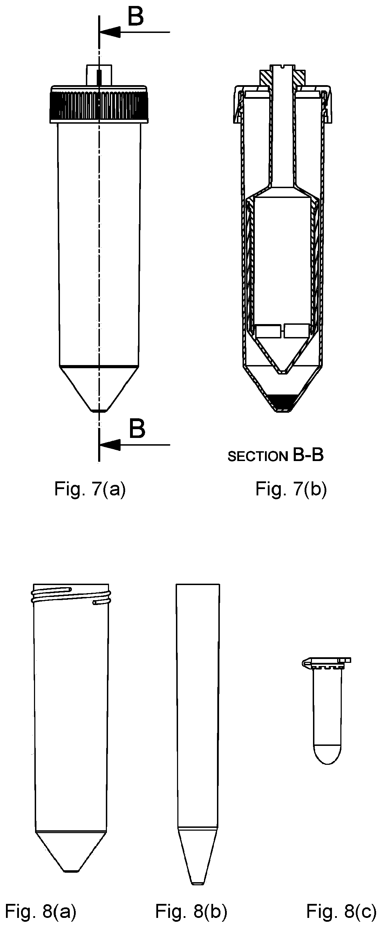

**FIG. 7**(a) shows a side view of a filtration device of the invention suspended from the standard tube cap via projections supported by the outer surface of the centrifuge prior to recovery of the retentate (concentrate) portion of the filtered liquid by centrifugation of this assembly. Fig. 7(b) shows a cross section of the assembly of Fig. 7(a) taken along line B-B showing the base of the filter device held in spaced separation from the bottom surface of the centrifuge tube and the position of the retentate (concentrate) following recovery of this liquid by centrifugation of the assembly of Fig 7(a).
**FIG. 8** is an illustrative view of the 3 sizes of standard laboratory centrifuge tube for utilisation with the devices and methods of the present invention.

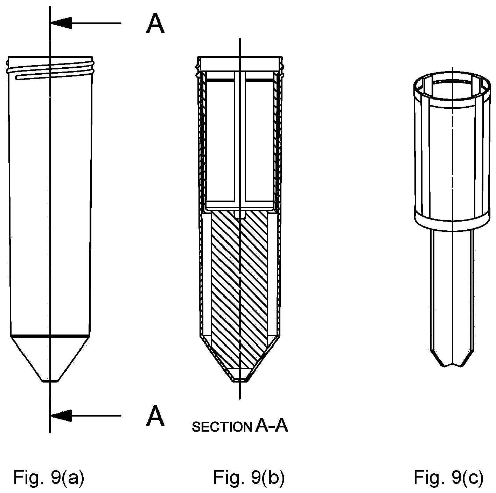

**FIG.** 9(a) shows a side view of the assembled components shown in Fig. 9(b). Fig. **9**(c) shows a device of the invention wherein the semipermeable membrane is retained in a cylindrical form substantially internal to the device. Fig. 9(b) shows a cross sectional view of the device of Fig. 9(c) inserted into the tube of Fig. 9(a) along line A-A of Fig. 9(a).

### EXAMPLES

### Introduction

We have conducted a range of laboratory experiments in order to evaluate the filtration performance of the system according to the invention. Comparisons have been made with equivalent commercially available devices (CAD) of similar volume capacities. Filtration devices had 25 ml. capacity and contained a membrane with 10,000 (Daltons) molecular weight cut off. These were filled with 25 ml of a solution containing of BSA of varying concentration levels - low - medium and high. The devices were run at 2,500 G centrifugation rating. A total of 10 devices were run in each case to monitor intra experimental variance.

In addition a fermentation broth containing bacteria was processed. Again CAD were compared to the new patent applied invention.

### Method

A 50 ml. tube capacity centrifuge with G force selection criteria enabled was employed to drive the filter systems in each case. A swing out rotor arm was used to hold the tubes and a 2,500 g selected as a standard setting. Devices were prepared with no prefiltration directly from supply and no pre-treatment was used.

Filtration was carried out according to the steps of the protocol set out below:

| | |
|---|---|
| *Step 1:* | Remove the screw-cap lid from the 50ml (L; large) or 15ml (M; medium) centrifuge tube and open the assembly. The assembly comprises the filtration device inserted in the centrifuge tube. |
| *Step 2:* | an optional initial membrane wash can be conducted by pipetting 10ml (L) / 3ml (M) of distilled water into the outer section of the assembly and spinning at 2500rpm for 1 minute (typically 500-3000 g). The wash water is then discarded. |
| *Step 3:* | Pipette up to 20ml (for 50ml large tubes) / 6ml (for 15 ml medium tubes) of the sample to be concentrated into the outer section of the assembly. |
| *Step 4:* | Screw the lid of the assembly back on tightly. |
| *Step 5:* | Once sample has been added to all assemblies to be subjected to centrifugation the assemblies should be balanced by weight to ensure the centrifuge works efficiently and to minimise safety risks to operator or the samples being processed. |
| *Step 6:* | Place the assemblies into a centrifuge and run at 2500 rpm for approximately 20-30 minutes (typically 500-3000 g), depending on the sample solution initial concentration and the molecular-weight cut-off (MWCO) of the semipermeable (ultrafiltration) membrane. Typically semipermeable membranes yielding a MWCO of 3,000, 10,000, 30,000 or 100,000 Daltons are used in the context of the device assemblies. The volume of the filtrate resulting from centrifugation is expected to be approximately 19.4 ml for the 50ml (L; large) and 5.7 mL for the 15ml (M; medium) centrifuge tube assemblies. The volume of the concentrate resulting from centrifugation is expected to be approximately 0.6 ml for the 50ml (L; large) and 0.3 ml for the 15ml (M; medium) centrifuge tube assemblies, depending on the sample solution initial concentration and the molecular-weight cut-off (MWCO) of the semipermeable (ultrafiltration) membrane. |
| *Step 7:* | After centrifugation, remove the assemblies from the centrifuge and open the lids. Pour off the filtrate from the inner volume of the filter device and remove the concentrate from the bottom of the centrifuge tube. If further concentration is required then the concentrate may be left in the assembly and the assembly centrifuged at the acceleration noted above for another 20-30 minutes. |
| *Step 8:* | Optionally, to increase concentration yet further, the filtrate can be removed, and the assembly centrifuged for another 20-30 minutes. |
| *Step 9:* | Remove the filtrate from the assembly. This may be done by using a pipette. |
| *Step 10:* | To recover the concentrate from the assembly, first, the screw cap lid is removed and replaced with a sample recovery lid. |
| | The sample recovery lid has a central hole in the surface of the cap and for slots extending radially at 0°, 90°, 180° and 270° wherein the length of the slots are slightly longer than the length of the suspending projections s of the upper tube of the filtration device such that the projections and the portion of the upper tube the projections are attached to can be passed through the sample recovery lid. In an alternative version of the sample recovery lid two slots extend radially at 0° and 180° from the central hole. Next, the user should carefully pull the inserted filtration device up and out of the centrifuge tube and install a sample recovery lid on the upper portion of the cultivation device in the manner described above and then turn the device 45° with respect to the sample recovery lid (or 90° for the alternative version of the sample recovery lid) for such that the filtration device is suspended from the sample recovery lid by the projections of the upper portion of the filtration device. Reinsert the alteration device in the centrifuge tube and then securely screw the sample recovery lid onto the centrifuge tube. |
| *Step 11:* | The assemblies should be balanced again by weight before placing them back into the centrifuge. |
| *Step 12:* | Centrifuge the assemblies for up to 3 minutes at a maximum speed of 2000rpm to facilitate sample recovery. |
| *Step 13:* | Remove the assemblies from the centrifuge and remove the sample recovery lid. |
| *Step 14:* | Carefully remove the filtration device from the centrifuge tube. |
| *Step 15:* | Recover the concentrate from the Tube, e.g. by using a pipette or store the concentrate in the centrifuge tube for later use by screwing an original screw cap for the centrifuge back on. |

### Experimental Results

### Example 1 - Dilute Protein Solution - starting concentration 0.1 mg/ml.

In a test of 10 filtration devices, which that are the subject of this specification and are disclosed herein, to process a dilute protein solution with starting concentration 0.1 mg/ml, the filtration rates (flux) in mL per minute set out in Table 1, below, were obtained.

**Table 1**

| | | | | | | | | | | |
|---|---|---|---|---|---|---|---|---|---|---|
| Device number | 1 | 2 | 3 | 4 | 5 | 6 | 7 | 8 | 9 | 10 |
| Filtration rate | 1.11 | 1.05 | 1.10 | 1.10 | 1.08 | 1.11 | 1.12 | 1.11 | 1.02 | 1.09 |

The mean filtration rate over these 10 examples was 1.089 ml/min.

The total processing time required to reach a concentration factor of 50x averaged 23 minutes.

By way of contrast, a standard commercial device was tested using the same conditions and protocol as for the filtration devices that are the subject of this specification. For the purposes of comparison this test was also carried out 10 times and the results are collated in Table 2, below.

**Table 2**

| | | | | | | | | | | |
|---|---|---|---|---|---|---|---|---|---|---|
| Commercial Device number | 1 | 2 | 3 | 4 | 5 | 6 | 7 | 8 | 9 | 10 |
| Filtration rate | 0.31 | 0.36 | 0.40 | 0.22 | 0.28 | 0.38 | 0.33 | 0.41 | 0.32 | 0.29 |

The mean filtration rate over these 10 examples was 0.33 ml./min.

The total processing time required to reach a concentration factor of 50x averaged 76 minutes.

These data show that a concentration procedure for a dilute protein solution utilising a filtration device as described herein will outperform a standard commercial product by approximately threefold. Without wishing to be bound by theory it appears that this advantage flows from the benefits provided by the device of the present invention possessing increased membrane area, the membrane contact time during processing being optimised, and improved flow characteristics resulting in lower fouling of the semipermeable membrane.

### Example 2 - Medium Concentration Protein Solution - 1 mg/ml.

In a test of 10 filtration devices, which that are the subject of this specification and are disclosed herein, to process a "medium" protein solution with starting concentration 1 mg/ml, the filtration rates (flux) in mL per minute set out in Table 3, below, were obtained.

**Table 3**

| | | | | | | | | | | |
|---|---|---|---|---|---|---|---|---|---|---|
| Device Number | 1 | 2 | 3 | 4 | 5 | 6 | 7 | 8 | 9 | 10 |
| Filtration Rate | 0.71 | 0.75 | 0.71 | 0.81 | 0.80 | 0.73 | 0.72 | 0.72 | 0.74 | 0.81 |

The mean filtration rate over these 10 examples was 0.75 ml./min.

The total processing time required to reach a concentration factor of 50x averaged 32 minutes.

By way of contrast, a standard commercial device was tested using the same conditions and protocol as for the filtration devices that are the subject of this specification. For the purposes of comparison this test was also carried out 10 times and the results are collated in Table 4, below.

**Table 4**

| | | | | | | | | | | |
|---|---|---|---|---|---|---|---|---|---|---|
| Commercial Device number | 1 | 2 | 3 | 4 | 5 | 6 | 7 | 8 | 9 | 10 |
| Filtration rate | 0.27 | 0.25 | 0.28 | 0.28 | 0.26 | 0.24 | 0.25 | 0.27 | 0.29 | 0.28 |

The mean filtration rate over these 10 examples was 0.267 ml./min.

The total processing time required to reach a concentration factor of 50x averaged 90 minutes.

These data show that a concentration procedure for a medium concentration protein solution utilising a filtration device as described herein will outperform a standard commercial product by approximately threefold.

### Example 3 - High concentration Protein solution - 10 mg/ml.

In a test of 10 filtration devices, which that are the subject of this specification and are disclosed herein, to process a "high" protein solution with starting concentration 10 mg/ml, the filtration rates (flux) in mL per minute set out in the Table 5, below, were obtained.

**Table 5**

| | | | | | | | | | | |
|---|---|---|---|---|---|---|---|---|---|---|
| Device number | 1 | 2 | 3 | 4 | 5 | 6 | 7 | 8 | 9 | 10 |
| Filtration rate | 0.66 | 0.65 | 0.63 | 0.63 | 0.68 | 0.63 | 0.67 | 0.67 | 0.64 | 0.62 |

The mean filtration rate over these 10 examples was 0.65 ml./min.

The total processing time required to reach a concentration factor of 50x averaged 38 minutes.

By way of contrast, a standard commercial device was tested using the same conditions and protocol as for the filtration devices that are the subject of this specification. For the purposes of comparison this test was also carried out 10 times and the results are collated in Table 6, below.

**Table 6**

| | | | | | | | | | | |
|---|---|---|---|---|---|---|---|---|---|---|
| Commercial Device number | 1 | 2 | 3 | 4 | 5 | 6 | 7 | 8 | 9 | 10 |
| Filtration rate | 0.21 | 0.24 | 0.20 | 0.20 | 0.20 | 0.19 | 0.22 | 0.22 | 0.19 | 0.18 |

The mean filtration rate over these 10 examples was 0.20 ml./min.

The total processing time required to reach a concentration factor of 50x averaged 125 minutes.

These data show that a concentration procedure for a higher concentration protein solution utilising a filtration device as described herein will outperform a standard commercial product by approximately threefold.

### Example 4 - Heavily laden fermentation broth concentration of E. Coli bacteria.

A viscous fermentation broth was prepared. Essentially the broth was a protein solution with a protein concentration of approximately 90 mg/ml.

This broth was introduced into the filtration devices, which that are the subject of this specification and are disclosed herein, for concentration according to the protocol given above. After a 30-minute centrifugation, 8 ml of protein-free filtrate was produced by these filtration devices.

By way of contrast, a standard commercial device was also tested using the same conditions and protocol. This commercial product did not function effectively because of fouling of the semipermeable membrane by the constituents of the fermentation broth. Accordingly, only a small volume (1 ml.) of filtrate was obtained when using these commercially available devices.

From these results we conclude that a concentration procedure for a fermentation broth utilising a filtration device as described herein will significantly outperform a standard commercial product. Indeed, we conclude that a filtration device as described herein will function effectively under conditions where a standard commercial product will not.

Without wishing to be bound by theory, it appears that this significant advantage flows from the benefits provided by the device of the present invention having a tube of semipermeable membrane which essentially floats in the broth. The presence of this tube means that a concentration polarisation layer (i.e. the cause of fouling) did not occur to the extent that effective fouling did not occur.

Furthermore, the concentrated broth was seen to precipitate and migrate to the bottom of the collection vessel. Micelles or other similarly relatively large constituents of fermentation broths or other biological extracts behave in a similar manner.

The invention thus provides improved devices for chemistry, biochemistry, molecular biology, biology, genetics at and/or physiology for selectively filtering molecules and macromolecules from liquid solutions. In particular the present invention is to provides devices of this type and function that operate by the filtrate being moved through a semipermeable membrane, such as an ultrafiltration membrane, by accelerative forces such as those provided by centrifuge. In this way the invention relates to a device and method for use thereof in the filtration of a fluid by facilitating the flow of filtrate from a reservoir outside the device (typically in the receptacle for centrifugation) to the inside portion ("vessel") of the device. The invention also relates to methods and tools for manufacture of devices of the invention.

## Claims

1. A device for insertion in a receptacle for acceleration by centrifugation comprising:
a vessel with side walls and a base;
wherein the side walls of the vessel comprise at least one portal;
wherein the portal is partially or wholly covered by a semipermeable membrane;
wherein the semipermeable membrane is located vertically with respect to the receptacle for centrifugation; and
wherein the filtering surface of the semipermeable membrane faces externally with respect to the interior of the vessel.

2. A device according to claim 1, wherein the base is sealed.

3. A device according to claim 1 or claim 2, wherein the semipermeable membrane is an ultrafiltration membrane.

4. A device according to any preceding claim, wherein the semipermeable membrane has a molecular-weight cut-off of 3,000, 10,000, 30,000 or 100,000 Daltons.

5. A device according to any preceding claim, wherein the semipermeable membrane is located in uniform spaced separation from the inner surface of the receptacle for centrifugation.

6. A device according to any preceding claim, wherein the semipermeable membrane follows the shape of the inner surface of the receptacle for centrifugation.

7. A device according to any preceding claim, wherein the separation distance between the inner surface of the receptacle for centrifugation and the semipermeable membrane is 0.1mm, 0.2mm, 0.3mm, 0.4mm, 0.5mm, 0.75mm, or 1mm.

8. A method for processing liquids or suspensions comprising the steps of:
inserting a device of any of claims 1-7 in a receptacle for centrifugation;
adding the liquid or suspension for processing to the receptacle for centrifugation or the vessel of the device of any of claims 1-7; and
subjecting the resulting assembly of parts to centrifugation or increased g forces.

9. A method according to claim 8, wherein the centrifugation is carried out in a centrifuge with a swinging-bucket rotor.

10. A method according to either of claims 8 or 9, wherein the volume of liquid or suspension for processing added to the receptacle for centrifugation installed in the receptacle for centrifugation is not greater than the volume of the vessel of the device combined with the volume of the receptacle external to the installed device to the height of the upper limit of the portal of the device.

11. A method according to claim 10, wherein the method comprises the step of centrifugation until the liquid levels within the vessel and within the receptacle reach equilibrium.

12. A kit comprising a device of claims 1-7, wherein the device is pre-installed in a receptacle for centrifugation.

13. An injection moulding tool for producing a device of claims 1-7.

14. A method of producing a device according to claims 1-7 comprising use of the injection moulding tool of claim 13.

15. A method of producing a device according to claims 1-7 according to claim 14, comprising the steps of:
a) applying portions of semipermeable membrane to pre-determined portions of the injection moulding tool,
b) closing the tool,
c) admitting heated plastics material to a void formed by closing the tool,
d) allowing the plastics material to set, and
e) removing the product from the tool wherein the semipermeable membrane is incorporated and/or secured in the plastics material of the product in a pre-determined position.
